# EUROPEAN PATENT SPECIFICATION

(11) **EP 3 923 043 B1**
(45) Date of publication and mention of the grant of the patent: **27.12.2023**
(21) Application number: 20752379.6
(22) Date of filing: 04.02.2020
(51) Int. Cl.: B42D 25/324, B42D 25/328, G02B 5/18

(54) **OPTICAL STRUCTURE AND ARTIFACT REDUCTION METHOD**
OPTISCHE STRUKTUR UND VERFAHREN ZUR ARTEFAKTREDUKTION
STRUCTURE OPTIQUE ET PROCÉDÉ DE RÉDUCTION D'ARTÉFACT

(30) Priority: 07.02.2019 JP 2019020496
(43) Date of publication of application: 15.12.2021
(73) Proprietor: Toppan Printing Co., Ltd., Tokyo 110-0016 (JP)
(72) Inventor: MITSUI, Kazunari, Tokyo 110-0016 (JP); SHINODA, Koichi, Tokyo 110-0016 (JP)
(74) Representative: TBK
(86) International application number: PCT/JP2020/004105
(87) International publication number: WO 2020/162449

(56) References cited:
- WO-A1-2018/097314
- WO-A1-2018/097314
- WO-A1-2019/022210
- JP-A- 2005 099 802
- US-A1- 2012 319 395
- US-A1- 2013 093 172
- US-A1- 2017 336 644
- US-B2- 8 866 008

## Description

### FIELD

Embodiments described herein relate generally to an optical structure that provides decorativeness and security to an object, and an artifact reduction method in the optical structure.

### BACKGROUND

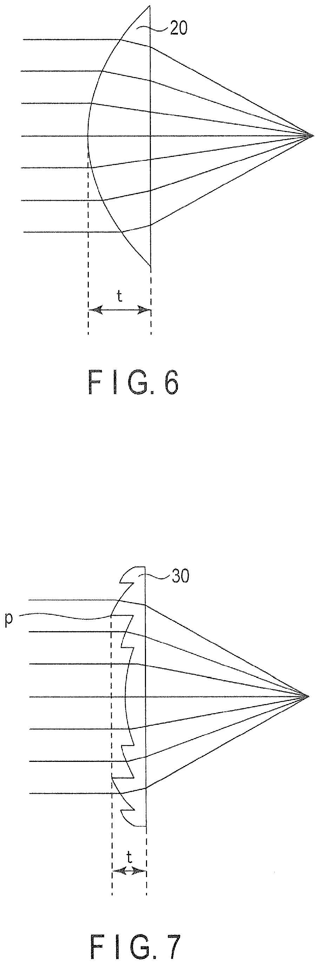

FIG. 6 is a side view showing an example of a convex lens.

As shown in FIG. 6, in an optical structure such as a convex lens 20 having a curved surface structure, a power of the lens can be increased by changing a thickness t of the convex lens 20.

Therefore, when the power of the lens is increased, the thickness t is increased.

However, increasing the thickness t leads to an increase in material cost. For example, in order to manufacture a convex lens having 10 times the thickness, 10 times the amount of resin is required. This increases the material cost by a factor of 10.

Therefore, in a simple lens structure such as the convex lens 20 realized by the curved surface structure, there is a trade-off between an effect and the material cost thereof.

To overcome this trade-off, a Fresnel lens is used instead of a simple lens structure such as the convex lens 20.

FIG. 7 is a side view showing an example of the Fresnel lens.

With such a side surface shape as shown in FIG. 7, a Fresnel lens 30 can obtain an optical function realized by a curved surface structure by changing an angle and a pitch of a pleat structure of a lens surface. Therefore, it is not necessary to increase the thickness t as much as the simple convex lens 20.

As described above, by applying the Fresnel lens 30, optical characteristics equivalent to those of the convex lens 20 can be obtained while realizing cost reduction, thinning, and weight reduction as compared with the convex lens 20.

Document WO 2018/097314 A1 discloses a display body, an authenticity determination method therefor, and printed matter.

### SUMMARY

However, the Fresnel lens has the following problems.

FIG. 8 is a plan view of a Fresnel lens having a side surface shape as shown in FIG. 7.

FIG. 9 is a plan view showing an example of an optical structure in which a Fresnel lens is approximated by a linear shape.

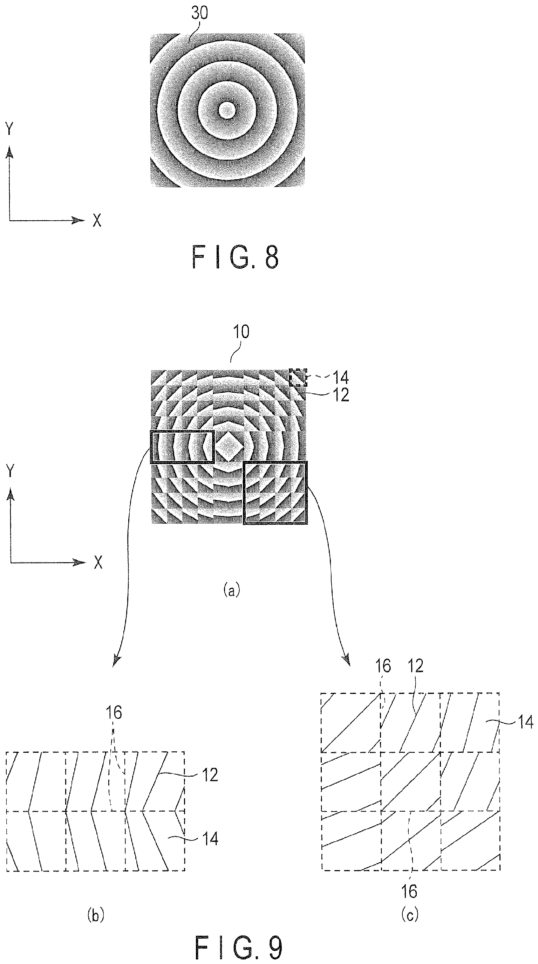

The Fresnel lens has a structure consisting of a plurality of concentric circles. This structure has a low degree of freedom in design and low processability. Thus, as shown in FIG. 9 (a), by approximating a curved surface on a plane of the Fresnel lens 30 shown in FIG. 8 with a linear structure, it is possible to increase the degree of freedom in design and improve processability.

At this time, the optical structure 10 can be composed of a plurality of cells 14 each having a square shape of equal size, which are regularly arranged in a square shape on an xy plane.

In the cell 14, a ridge line 12 corresponding to a peak p of an unevenness shown in FIG. 7 is linearly arranged.

In this manner, the optical structure 10 is divided into the cells 14, and the structure inside the cells 14 is formed into a linear shape, so that the curved line structure can be approximated. However, when the curved line structure is approximated by the linear shapes, approximation errors occur. As a result, the linear shapes are not continuous between the cells 14, and there is a portion where the pleat structures are discontinuous at a boundary 16 between adjacent cells 14. If the size of the cell 14 is minimized, an approximation error thereof is minimized, but a small cell 14 is difficult to process, and
an excessively small cell 14 is not practical.

When the optical structure 10 is composed of the cells 14 and the curved line structure is approximated by a linear shape in this way, an approximation error occurs, and as shown in FIG. 9 (b), which is an enlarged view of part of FIG. 9 (a), there is a portion where the pleat structures are continuous at a boundary 16 of adjacent cells 14, but as shown in FIG. 9 (c), which is an enlarged view of another part of FIG. 9 (a), there is a portion where the pleat structures are discontinuous at a boundary 16 of adjacent cells 14.

At the portion where the pleat structures are discontinuous at a boundary 16 of adjacent cells 14, light scattering occurs. The intensity of the scattering tends to increase as a deviation amount of the ridge lines 12 of the discontinuous pleat structures at the boundary increases. The deviation amount differs depending on the location. Further, in a case where a structure to be approximated has a continuous shape, a deviation amount thereof is similar between adjacent cells 14. In other words, the deviation amount varies gradually between the adjacent cells 14. For this reason, there is a tendency for portions with a large deviation to be concentrated together and portions with a small deviation to be concentrated together, respectively. Thus, light due to scattering is strong in the portions with a large deviation, and the intensity of light due to scattering is weak in the portions with a small deviation. Therefore, artifacts due to the intensity of scattering occur. The artifacts are a phenomenon similar to moire in which noise occurs due to a difference in frequency of a period between similar periodic structures.

According to an embodiment of the present invention, it is possible to provide an optical structure and an artifact reduction method capable of reducing artifacts without causing a change in optical characteristics even when a curved surface is simulated in a linear shape.

In order to achieve the above object, the embodiment of the present invention has the following aspects.

A first aspect of the present invention is an optical structure according to claim 1, and a method for reducing artifacts in the optical structure according to claim 7. Further aspects of advantageous further developments are defined in the dependent claims.

Insofar, according to a second aspect of the present invention, in the optical structure and the artifact reduction method according to the first aspect of the present invention, the shift amount is calculated using a pseudo random number in a range equal to or less than an interval between adjacent ridge lines in the same cell.

According to a third aspect of the present invention, in the optical structure and the artifact reduction method according to the first or second aspect of the present invention, the shift amount is calculated for each cell.

According to a fourth aspect of the present invention, in the optical structure and the artifact reduction method according to the first or second aspect of the present invention, a plurality of cells are respectively grouped such that cells separated from each other by a predetermined distance on an embossed surface belong to the same group, and the shift amount is calculated for each group.

According to a fifth aspect of the present invention, in the optical structure and the artifact reduction method according to the fourth aspect of the present invention, the predetermined distance is an isolation distance at which shading due to repetition of the grouped cells is not recognized as artifacts.

According to a sixth aspect of the present invention, in the optical structure and the artifact reduction method of the fifth aspect of the present invention, the isolation distance is 10 cm or more.

According to an example not forming part of the present invention , there is provided an optical structure including a plurality of cells having a pleat structure aligned regularly in contact with each other on an embossed surface, wherein the pleat structure has a plurality of inclined surfaces parallel to each other, the pleat structure has a linear ridge line formed of an inclined surface end, each ridge line is parallel to a straight line approximating a smooth curved line, an angle of an inclined surface in a cell continuously varies between adjacent cells, an inclined surface group of each aligned cell displays an appearance of a smooth curved surface by reflected light of the inclined surfaces, and the optical structure has cells having different interval depths of the ridge lines of the pleat structures between the cells.

With such a structure, development of iridescence due to the pleat structure can be suppressed. When such a structure is formed, the depth of the pleat structure may differ between the cells. In addition, it can also be combined with the first aspect of the present invention, thereby suppressing the artifacts and iridescence development, and thus it is easy to obtain a good appearance. When the depth of the pleat structure in each cell is different, artificial fluctuation of a distance of a ridge line, among the ridge lines in each cell, closest to a predetermined reference point of the cell from the reference point may be correlated or uncorrelated.

According to the present invention, it is possible to realize an optical structure and an artifact reduction method capable of reducing artifacts without causing a change in optical characteristics even when a curved line shape is simulated by a linear shape.

Examples which are not encompassed in the scope of the invention, even if they are named "embodiments" in the corresponding parts of the description, are not to be considered as being part of the claimed invention. The scope of protection is defined solely by the appended claims.

### BRIEF DESCRIPTION OF THE DRAWINGS

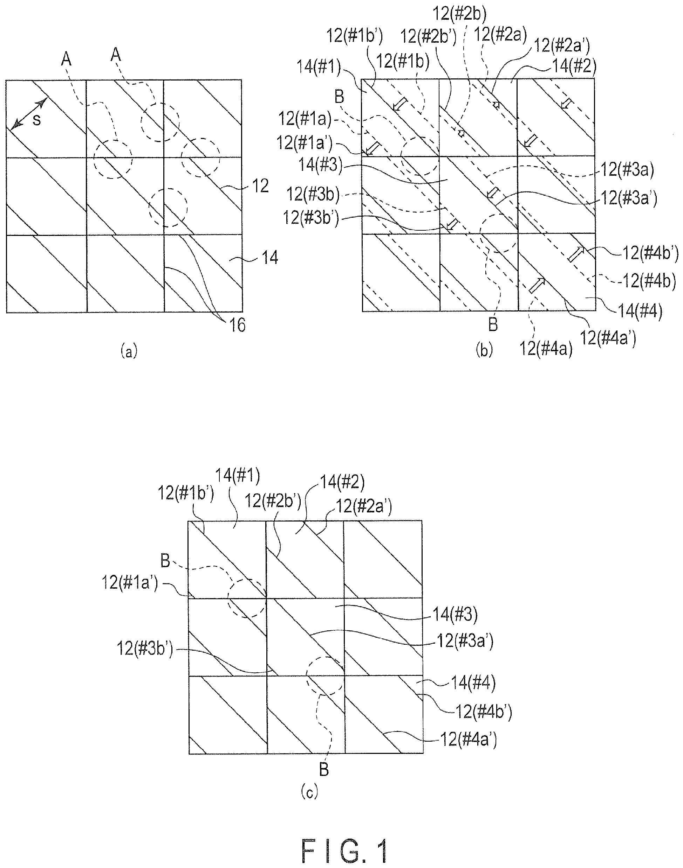

FIG. 1 is a cell plan view for explaining an artifact reduction method according to an embodiment of the present invention.

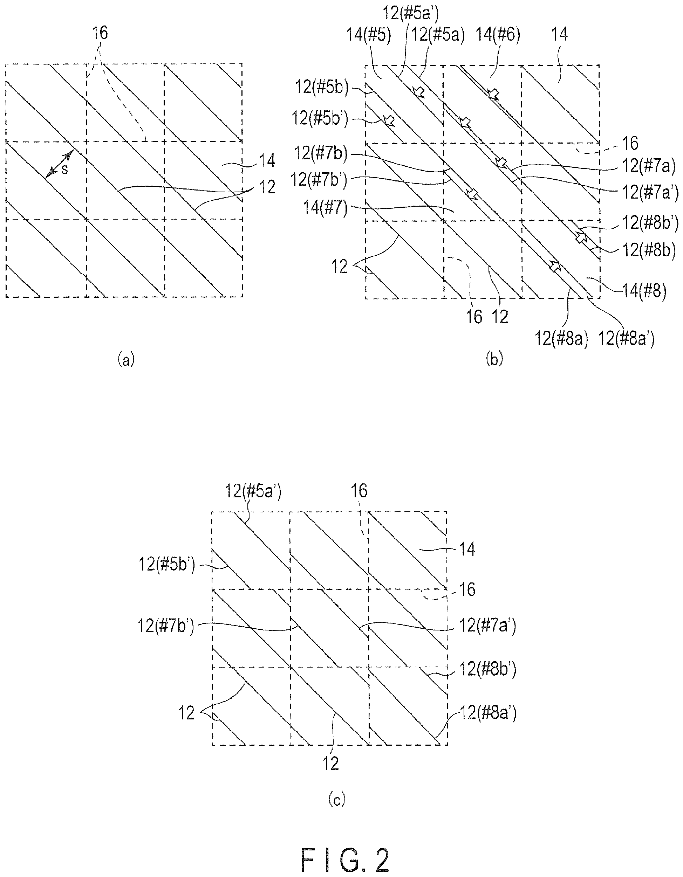

FIG. 2 is another cell plan view for explaining the artifact reduction method according to the embodiment of the present invention.

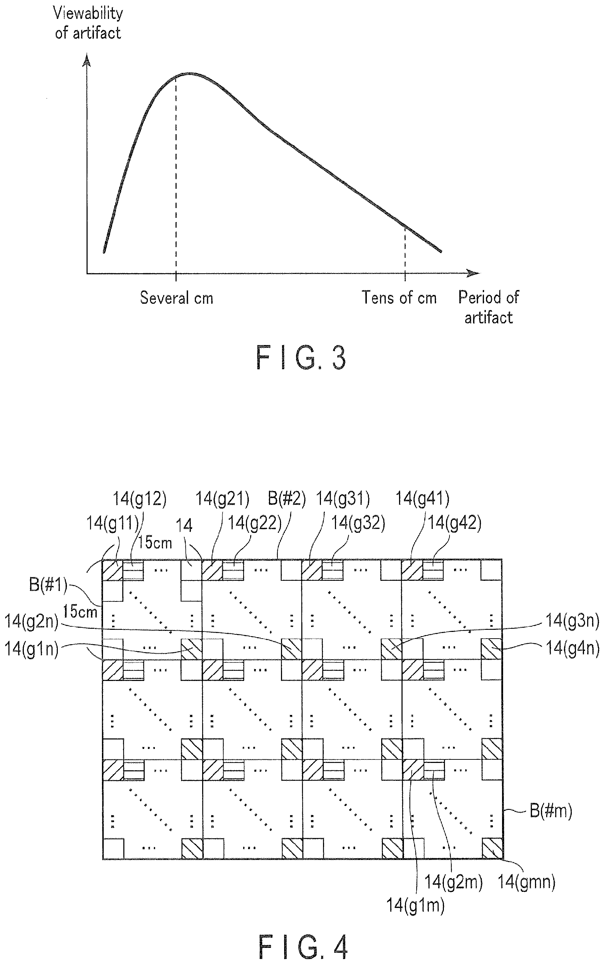

FIG. 3 is a conceptual diagram showing a spatial frequency of artifacts and viewability thereof.
FIG. 4 is a diagram for explaining a concept of a square region in which a plurality of cells are coordinated in order to reduce an amount of calculation when calculating a shift amount.

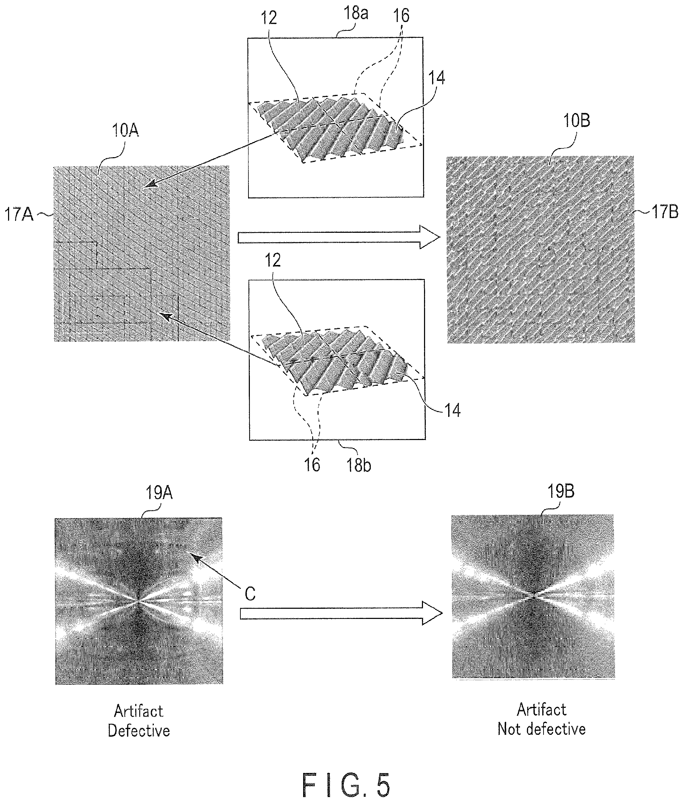

FIG. 5 is a diagram comparing optical structures before and after application of the artifact reduction method according to the embodiment of the present invention.
FIG. 6 is a side view showing an example of a convex lens.
FIG. 7 is a side view showing an example of a Fresnel lens.
FIG. 8 is a plan view of the Fresnel lens having a side surface shape as shown in FIG. 7.
FIG. 9 is a plan view showing an example of an optical structure simulating a Fresnel lens in a linear shape.

### DETAILED DESCRIPTION

Hereinafter, an optical structure to which an artifact reduction method according to an embodiment of the present invention is applied will be described with reference to the drawings. It should be understood that the embodiment of the present invention is representative of the present invention, which is intended to explain the gist of the invention and should not limit the following interpretation of the embodiment of the present invention. The representative embodiment of the present invention described below can be appropriately modified in design by a person with ordinary skill in the art.

In addition, the drawings are illustrative, and dimensions shown in the drawings may be different from actual dimensions, for example, thicknesses of respective layers and ratios thereof, and dimensional ratios in the drawings should not be interpreted as being limited to the ratios shown in the drawings. In addition, unless there is a reason to do otherwise for convenience, the same components in the embodiments of the present invention will be described with the same reference signs, and repeat descriptions will be omitted. In the drawings, the same parts are denoted by the same reference signs.

The embodiment of the present disclosure is a group of embodiments based on a single unique invention from the background. Also, each aspect of the present disclosure is an aspect of a group of embodiments based on a single invention. Each configuration of the present disclosure may have each aspect of the present disclosure. Features of the present disclosure can be combined to form each configuration. Accordingly, each feature of the present disclosure, each configuration of the present disclosure, each aspect of the present disclosure, and each embodiment of the present disclosure can be combined, and the combination may have a synergistic function and exert a synergistic effect.

An optical structure to which the artifact reduction method according to the embodiment of the present invention is applied will be described with reference to FIG. 9 again.

The optical structure 10 according to the embodiment of the present invention is formed such that, for example, a plurality of cells 14 having a pleat structure are aligned regularly in contact with each other on an embossed surface, as shown in FIG. 9. Each cell 14 can be densely tiled without a gap with adjacent cells 14. As a result, it is possible to prevent deterioration of an optical effect due to a gap between the cells 14. On the other hand, it is known that periodicity generally occurs when the cells 14 are densely tiled. The tiling can be a square array or a hexagonal array.

As shown in FIG. 7, a pleat structure is provided on a surface of each cell 14. The pleat structure has a plurality of inclined surfaces parallel to each other, and in the pleat structure, an inclined surface end portion, i.e., the linear ridge line 12 formed of the peak p of the unevenness, has a linear shape approximate to a curved line shape as shown in FIG. 8. Thereby, each ridge line 12 is parallel to a curved line approximating a smooth curved line, and the pleat structure is linear. A pitch of the pleat structure can be 5 µm or more and 30 um or less, and a height of the peak p, that is, a depth of the pleat structure, can be 1 µm or more and 10 µm or less. The depth of the pleat structures of adjacent cells 14 can be uniform, and an interval of the ridge lines 12 within a cell 14 varies continuously between adjacent cells 14. A cross-sectional shape of the pleat structure can be a saw shape having an inclined surface and a rising surface. An inclination angle of the inclined surface can be 60° or less. A curvature radius of the top of the saw shape is 0.1 to 0.5 µm. A surface roughness of the inclined surface is 1.0 to 20 nm. As a method for measuring the surface roughness, an atomic force microscope, etc. is used. A unit of the surface roughness can be Ra. In other words, the pleat structure can be in a triangular prism shape having an inclined surface and a rising surface.

In addition, in FIG. 9, in the cell 14, a direction of the pleat structure (i.e., a direction of the inclined surface of the saw shape) and each inclined surface of the pleat structure can approximate inclination of a continuous curved surface. The continuous curved surface to be approximated can be a surface which is at least locally differentiable. Each inclined surface of the pleat structure can be a first differential of the curved surface. That is, a normal vector of the pleat structure and a normal vector at a part of the curved surface to be approximated that corresponds to the pleat structure can be made to coincide with each other. Further, a normal vector of an inclined surface of a cell 14 can be inside normal vectors of inclined surfaces of surrounding cells adjacent to the cell 14. In other words, when a normal vector of an inclined surface of a cell 14 is represented by a sum of normal vectors of inclined surfaces of surrounding cells adjacent to the cell 14, coefficients of the normal vectors of the inclined surfaces of the surrounding cells adjacent to the cell 14 can be positive. An inclination angle of an inclined surface of a cell 14 can be an intermediate angle between inclination angles of inclined surfaces of cells adjacent to and located on both sides of the cell 14.

A surface obtained by analyzing and connecting the inclined surfaces of the pleat structures can be an approximate continuous curved surface. That is, an inclination of the inclined surfaces of the pleat structures can be made similar to an inclination of a spherical surface as shown in FIG. 8. As described above, when a pleat structure in a cell 14 has a linear shape, an optical function can be exhibited by a normal vector of an inclined surface of the pleat structure regardless of the size of the pleat structure and an arrangement position thereof within the cell 14.

As a result, an inclined surface group of each aligned cell 14 displays an appearance of a smooth curved surface by reflected light of the inclined surfaces. Thus, even in the optical structure in which the pleat structure is formed in a linear shape as shown in FIG. 9, the same optical characteristics as those of the optical structure formed of a continuous curved surface as shown in FIG. 8 can be realized. That is, the optical characteristics of the continuous curved surface can be reproduced in a pseudo manner by the inclined surfaces of the linear pleat structures in the arrayed cells 14 in the optical structure 10. In other words, the optical characteristics of the continuous curved surface can be approximated by the pleat structures of a linear shape within the arrayed cells 14 of the optical structure 10.

The size of each cell 14 can be 10 µm or more and 500 µm or less. When the size is 10 µm or more, scattering is less likely to occur. In addition, when the size of each cell 14 is 500 µm or less, they are difficult to visually recognize with the naked eye. Further, the size of each cell 14 can be 10 µm or more and 150 um or less. When the size of each cell 14 is 150 um or less, jaggies are less likely to occur. The size of the cell 14 can be the length of one side of the cell 14. The cells may be of the same size or of different sizes. The cells can also be arranged periodically. The periodic arrangement makes it easy to arrange the cells adjacent to each other and to maximize the reflected light from the inclined surfaces. The periodic arrangement can be a lattice array. Also, the cell size may vary from motif to motif or segment to segment within a motif. In this case, a delicate motif is easily formed.

In this manner, the optical structure 10 is divided into the cells 14, and the structure inside the cells 14 is formed into a linear shape, so that a curved line structure can be approximated. However, when a curved line structure is approximated by a linear shape, an approximation error occurs, and as a result, a place where the pleat structures are discontinuous occurs between adjacent cells 14. In this case, at a boundary 16 of the adjacent cells 14, there is a portion where the pleat structures are discontinuous. If the size of a cell 14 is minimized, an approximation error thereof is minimized, but the small cell 14 is difficult to process, and an excessively small cell 14 is not practical.

When a curved line shape is approximated by a linear prism, as shown in FIG. 9 (b), which is an enlarged view of part of FIG. 9 (a), there is a portion where the linear pleat structures are continuous at a boundary 16 of adjacent cells 14, but as shown in FIG. 9 (c), which is an enlarged view of another part of FIG. 9 (a), there is also a portion where the linear pleat structures of adjacent cells 14 are discontinuous.

As shown in FIG. 9 (c), at the boundary 16 of the adjacent cells 14, if boundaries similar in deviation of the discontinuous pleat structures at the boundary 16 of the adjacent cells 14 of a linear pleat structure exist densely, due to scattering caused by the deviation of the linear pleat structures, scattered light may become artifacts visible to the naked eye. The artifacts are not an ideal optical characteristic of the optical structure 10 but noise. Thus, if the artifacts occur, the optical characteristics deteriorate.

Accordingly, in the artifact reduction method according to the embodiment of the present invention, the linear pleat structure in the cell 14 is shifted in parallel by a shift amount within the cell 14. This can be realized by, for example, causing a distance of a ridge line closest to a reference point, which is the center of each cell 14, among the ridge lines 12 in the cell 14 from the reference point to have artificial fluctuation. In addition, an interval between the ridge lines in each cell may have artificial fluctuation. At this time, a pleat depth between adjacent cells may also fluctuate according to the interval between the ridge lines. In other words, the interval between the ridge lines and the pleat depth between the cells have randomness. An average depth can then be uniform within the motif. This makes it easy to achieve both moldability and artifact reduction. Further, both of a distance of a ridge line closest to a predetermined reference point in each cell 14 among the ridge lines 12 in the cell 14 from the reference point and a distance between ridge lines in each cell may have artificial fluctuation. Note that pleats in a cell may have different depths.

FIGS. 1 and 2 are cell plan views for explaining the artifact reduction method according to the embodiment of the present invention.

Similarly to FIG. 9 (c), FIG. 1 (a) illustrates a portion where the linear pleat structures are discontinuous at a boundary 16 of adjacent cells 14. In FIG. 1 (a), it is explained that portions where a deviation amount A of the pleat structures between the cells 14 is large are concentrated.

Similarly to FIG. 9 (b), FIG. 2 (a) illustrates a portion where the linear pleat structures are continuous at a boundary 16 of adjacent cells 14.

FIG. 1 (b) illustrates a state in which the linear pleat structures in the cells 14 are shifted in parallel from the state illustrated in FIG. 1 (a) by an artificial fluctuation amount in a range equal to or less than an interval s between adjacent ridge lines, within the respective cells 14.

In FIG. 1 (b), in a cell 14 (#1), a ridge line 12 (#la) of the linear pleat structure and a ridge line 12 (#1b) of the linear pleat structure are shifted in parallel to a ridge line 12 (#1a') and a ridge line 12 (#1b'), respectively, by a shift amount in a range equal to or less than the interval s between the adjacent ridge lines as indicated by arrows in the drawing. That is, as the artificial fluctuation, the position where the linear pleat structure is provided is shifted in parallel. In a cell 14 (#2), a ridge line 12 (#2a) and a ridge line 12 (#2b) are similarly shifted in parallel to a ridge line 12 (#2a') and a ridge line 12 (#2b'), respectively, as indicated by arrows in the drawing. Similarly, in a cell 14 (#3) and a cell 14 (#4), a ridge line 12 (#3) and a ridge line 12 (#4) are shifted in parallel to a ridge line 12 (#3') and a ridge line 12 (#4'), respectively, by a shift amount. FIG. 1 (c) is a diagram illustrating the ridge lines after the shift.

In the optical structure before the ridge lines 12 are shifted in parallel according to the shift amount, that is, the optical structure without artificial fluctuation, as shown in FIG. 1 (a), there are a plurality of boundaries where the pleat structures are discontinuous at the boundary 16 of the cells 14. If a plurality of boundaries having the same deviation amount of the ridge lines 12 of the discontinuous pleat structures at the boundary 16 of the cells 14 exist densely on the plane, artifacts may occur.

However, after the artificial fluctuation is realized by shifting the ridge lines 12 in parallel by a shift amount in a range equal to or less than the interval s between the adjacent ridge lines, as shown in FIG. 1 (c), a plurality of boundaries having the same deviation amount B of the ridge lines 12 of the discontinuous pleat structures at the boundary 16 of the cells 14 are not concentrated but dispersed. Thus, as shown in FIGS. 1 (b) and 1 (c), distribution of the deviation amount B of the linear pleat structures is homogenized, and scattering according to the deviation amount B is homogenized, so that occurrence of artifacts is reduced.

Incidentally, FIG. 1 (a) illustrates the case where a portion where the ridge lines 12 are discontinuous exists at the boundary 16 of the adjacent cells 14, but in the case where the ridge lines 12 are continuous at the boundary 16 of the adjacent cells 14 as shown in FIG. 2 (a), if the artificial fluctuation is realized by shifting the ridge lines 12 in parallel by the shift amount as described above, after the shift, i.e., after the artificial fluctuation is realized, as shown in FIG. 2 (b) showing the parallel shift of the ridge lines and FIG. 2 (c) illustrating the ridge lines after the shift, from FIG. 2 (a) illustrating the ridge lines before the shift, i.e., before the artificial fluctuation is realized, the ridge lines 12 become discontinuous at the boundary 16 of the adjacent cells 14.

However, artifacts occur when the boundaries 16 of the cells 14 having the same deviation amount of the discontinuous ridge lines 12 at the boundary 16 of the adjacent cells 14 exist densely on the plane. Therefore, as shown in FIG. 2 (c), even if the ridge lines 12 are discontinuous at the boundary 16 of the adjacent cells 14, boundaries 16 of cells 14 having the same deviation amount of discontinuous ridge lines 12 at a boundary 16 of adjacent cells 14 are not dense on the plane due to the artificial fluctuation caused by a parallel shift amount within a range equal to or less than the interval s between the adjacent ridge lines 12 in the same cell 14, so that the occurrence of artifacts can be prevented.

Note that, as shown in FIG. 2 (c), even if the artificial fluctuation is realized by shifting the ridge lines 12 in parallel by the shift amount, since the pitch and direction of the pleat structures do not change, the optical characteristics of the pleat structures do not change.

As described above, by realizing the artificial fluctuation by shifting ridge lines 12 in a cell 14 in parallel by a shift amount within a range equal to or less than an interval s between adjacent ridge lines 12 in the cell 14, a deviation amount of ridge lines 12 of discontinuous pleat structures at a boundary 16 of cells 14 is dispersed without being similar at a plurality of adjacent boundaries 16, so that artifacts can be reduced.

Next, a method of determining a shift amount will be described.

As described above, since a shift amount is in a range equal to or less than an interval s between adjacent ridge lines 12, the shift amount can be calculated using a random number so that the maximum value becomes the interval s. However, it is generally difficult for a computer to output a completely random number, that is, a numerical value completely without periodicity. Thus, a pseudo random number can be used instead of a completely random number. The pseudo random number is preferably equal in frequency, uncorrelated, and long in period. By ensuring an equal frequency, non-correlation, and long period, the occurrence of artifacts can be effectively suppressed. In addition, the equal frequency, non-correlation, and long period can be appropriately determined by a person with ordinary skill in the art. Although the pseudo random number has periodicity, the period can be made sufficiently longer than the number of cells for which the occurrence of artifacts should be considered. Thus, it is possible to reduce the possibility that shading due to periodicity of a deviation amount will appear. Therefore, a pseudo random number can be used instead of a completely random number to calculate a shift amount. To generate a pseudo random number, the linear congruential method, the linear feedback shift register, and the Mersenne twister method can be applied.

The size of a region in which the occurrence of artifacts should be considered will be described with reference to FIG. 3.

FIG. 3 is a conceptual diagram showing a spatial frequency of artifacts and viewability thereof, in which the abscissa axis represents a period of discontinuity and the ordinate axis represents the viewability of an artifact. This depends on spatial frequency characteristics of a contrast of shading of the human eye.

FIG. 3 shows that, as illustrated in FIG. 1 (a), for example, a frequency component of shading of several millimeters to several centimeters is most easily observed, and thus the artifacts are most conspicuous. In addition, according to FIG. 3, it is shown that the viewability of an artifact gradually decreases when a period of discontinuity becomes larger than several millimeters to several centimeters. For example, in a case where the period of discontinuity is tens of centimeters, even if a plurality of boundaries having the same deviation amount of ridge lines 12 of discontinuous pleat structures at a boundary 16 of adjacent cells 14 are concentrated, it is difficult to visually recognize the artifacts. Further, when the period of artifacts becomes several millimeters or less, the artifacts fall below the resolution of the human eye, so that the artifacts are not resolved and not visually recognized.

In the embodiment of the present invention, the size of the cell 14 is several mm or less, and particularly preferably 10 um or more and 500 µm or less. In this case, about 200 to 10,000 cells 14 are present in 10 cm. Therefore, if a period of a pseudo random number is 10,000 or more, there is a low possibility that shading that causes artifacts will occur. A pseudo random number having a period of 10,000 or more is known, and such a random number can be used as a shift amount in the embodiment of the present invention.

The shift amount can be a value unique to each cell 14. This is because when the ridge lines 12 are shifted in parallel by the same shift amount in all the cells 14, a plurality of boundaries having similar deviation amounts of the ridge lines 12 of the pleat structures are concentrated, which may cause artifacts.

The ridge lines 12 can be shifted in parallel by a shift amount determined by a pseudo random number within a range of the interval s between adjacent ridge lines 12 or less for each cell 14 so as not to form a pattern that may cause artifacts. Further, from the above viewpoint, it is required that the ridge lines 12 be shifted in parallel by different shift amounts in adjacent cells 14.

However, calculating shift amounts for all the cells 14 may take a long time. For example, when the size of the optical structure 10 is small and the number of cells 14 is small, there may be little influence, but when the size of the optical structure 10 is large and the number of cells 14 is large, a large calculation time is required.

In such a case, as described below, it is possible to reduce an amount of calculation by using the principle described above with reference to FIG. 3.

That is, as shown in FIG. 3, when the period of distribution of a deviation amount of discontinuous ridge lines 12 of the structure at the boundary 16 of adjacent cells 14 becomes larger than several centimeters, the viewability of artifacts gradually decreases. When the period of artifacts is tens of centimeters, even if a plurality of boundaries having the same deviation amount of the ridge lines 12 of discontinuous pleat structures at the boundary 16 of adjacent cells 14 are concentrated, it is difficult to observe the artifacts.

Thus, on the embossed surface of the optical structure 10, artifacts of the pleat structures between cells 14 due to discontinuity of the ridge lines 12 between the cells 14 are easy to visually recognize in the period up to tens of centimeters, but are difficult to visually recognize in the cells 14 separated by tens of centimeters or more even when the ridge lines 12 are shifted in parallel by the same shift amount. Therefore, a sequence used for a shift amount may have a long period such that the cells 14 separated from each other by tens of centimeters have the same pattern. Thus, a calculation amount can be reduced by appropriating a calculation result. This will be described with reference to FIG. 4.

FIG. 4 is a diagram for explaining a concept of a square region in which a plurality of cells are coordinated in order to reduce a calculation amount when calculating a shift amount.

As shown in FIG. 4, a shift amount is calculated for each of cells 14 (g11), (g12), ..., and (gln) in a square region B (#1) having one side of 10 cm or more, and for each of the cells 14 in the other square regions B (#2) to B (#m), the shift amount calculated for the cell 14 at the corresponding position in the square region B (#1) can be used.

For example, the shift amount calculated for the cell 14 (g11) in the square region B (#1) can also be used for a cell 14 (g21) in the square region B (#2), a cell 14 (g31) in the square region B (#3), a cell 14 (g41) in the square region B (#4), ..., and a cell 14 (gm1) in the square region B (#m). Similarly, the shift amount calculated for the cell 14 (g12) in the square region B (#1) can also be used for a cell 14 (g22) in the square region B (#2), a cell 14 (g32) in the square region B (#3), a cell 14 (g42) in the square region B (#4), ..., and a cell 14 (gm2) in the square region B (#m).

As described above, if a plurality of cells 14 are grouped such that cells 14 (e.g., the cell 14 (g11), cell 14 (g21), cell 14 (g31), cell 14 (g41), ..., and cell 14 (gm1)) separated from each other by a distance that does not allow the naked eye to clearly recognize a difference in shading or more, such as 10 cm, belong to the same group (e.g., "a first group") and only one shift amount is calculated for each group, artifacts are not observed and the calculation amount can be reduced. In addition, the same shift amount can be applied to different motifs.

As described above, according to the optical structure 10 to which the artifact reduction method of the embodiment of the present invention is applied, by arranging the pleat structures in the cells 14 by shifting them in parallel by a shift amount calculated for each cell 14, it is possible to reduce artifacts without changing the optical characteristics.

A shift amount for each cell 14 is preferably determined for each cell 14 using a random number such as a pseudo random number. However, by considering a range in which a human being can recognize artifacts, it is sufficient to calculate shift amounts only for some representative cells 14, so that it is also possible to reduce the calculation amount.

An effect of such an artifact reduction method according to the embodiment of the present invention will be exemplified with reference to FIG. 5.

FIG. 5 is a diagram comparing optical structures before and after application of the artifact reduction method according to the embodiment of the present invention.

A structure microscope plan-view photograph 17A is an example of a front view of an optical structure 10A before the application of the artifact reduction method according to the embodiment of the present invention.

The optical structure 10A includes a boundary where a deviation amount of ridge lines 12 of discontinuous pleat structures at a boundary 16 of cells 14 is small, as illustrated in a partial perspective view 18a, and a boundary where a deviation amount of ridge lines 12 of discontinuous pleat structures at a boundary 16 of cells 14 is large, as illustrated in a partial perspective view 18b. As a result, in the optical structure 10A, artifacts C occur due to scattering at a boundary where ridge lines 12 are discontinuous at a boundary 16 of cells 14, as shown in an exterior photograph 19A.

On the other hand, a structure microscope plan-view photograph 17B is a front view of an optical structure 10B obtained by applying the artifact reduction method according to the embodiment of the present invention to the optical structure 10A.

As shown in the structure microscope plan-view photograph 17B, in the optical structure 10B, positions of ridge lines 12 in the cells 14 are shifted in parallel by a shift amount calculated for each cell 14. Therefore, the deviation amount of the ridge lines 12 of the pleat structures at the boundary 16 of the cells 14 is homogenized overall.

An exterior photograph 19B is obtained by photographing such an optical structure 10B. It can be seen that the artifacts observed in the exterior photograph 19A disappear in the exterior photograph 19B.

In this way, according to the embodiment of the present invention, even when a curved surface is simulated by a linear pleat structure, it is possible to reduce artifacts without causing a change in optical characteristics. The described curved surface has a spherical shape, but may be a parabolic surface or a curved surface expressed by a polynomial. That is, it is an ellipsoid, a hyperboloid, a quadric surface, etc. Further, the curved surface may be not only a convex curved surface but also a concave curved surface. Or, a combination of a convex curved surface and a concave curved surface may be used. Alternatively, a contour line having a height of 0 may be an outer shape of the curved surface. It may also be a motif of characters or symbols.

### [Manufacturing Method of Optical Structure]

Hereinafter, a manufacturing method of the optical structure 10 including a reflective layer, an adhesive layer, and a carrier in addition to an embossed layer will be described.

When the optical structure 10 is manufactured, first, an embossed layer including a flat surface and an embossed surface is formed. A method of forming an embossed layer having an embossed surface including unevenness may be a method of producing an original plate corresponding to the shape of the embossed surface and then covering a stamp surface of the original plate with the embossed layer to duplicate the uneven shape of the original plate. That is, by embossing the stamp surface of the original plate on the embossed layer of the optical structure 10, the embossed surface can be formed on the embossed layer.

When manufacturing the original plate, first, a photosensitive resist is applied to one surface of a substrate having a flat plate shape. Thereafter, the photosensitive resist is irradiated with a beam to expose a part of the photosensitive resist. Next, the photosensitive resist is developed. Then, a metal stamper is formed from the developed photosensitive resist by electroplating, etc. An original plate having a stamp surface corresponding to the shape of an embossed surface 11R is formed by using the metal stamper as a matrix. The stamper made of metal can also be formed by cutting a metal plate.

The embossed layer may be a multilayer. In the case where the embossed layer is a multilayer, the embossed layer can have a configuration of a release layer of a thermoplastic resin and a formation layer of a cured resin. The release layer can releasably hold the embossed layer on the carrier. In the formation layer, an uneven shape can be formed by embossing.

A material for forming the embossed layer can be a resin. The resin of the forming material can be a thermoplastic resin or a cured resin. As the various resins, a poly(meth)acrylic resin, a polyurethane resin, a fluorine resin, a silicone resin, a polyimide resin, an epoxy resin, a polyethylene resin, a polypropylene resin, a methacrylic resin, a cyclic polyolefin resin, a polystyrene resin, a polycarbonate resin, a polyester resin, a polyamide resin, a polyamide-imide resin, a cellulose resin, etc. can be used. The polystyrene resin may be an acrylonitrile-(poly)styrene copolymer (AS resin), an acrylonitrile-butadiene-styrene copolymer (ABS resin), etc. The material for forming the embossed layer may be only one of these resins, or may be a mixture or composite of two or more resins. The resin becomes a thermoplastic resin when no curing agent is added. On the other hand, a cured resin can be obtained by adding a curing agent. The thickness of the embossed layer can be 1 µm or more and 20 µm or less.

The material for forming the embossed layer may further contain an additive. The additive may be at least one of a curing agent, a plasticizer, a dispersant, various leveling agents, an ultraviolet absorber, an antioxidant, a viscosity modifier, a lubricant, a light stabilizer, etc.

A reflective layer may be formed so as to follow the embossed surface of the embossed layer. The reflective layer can be formed by deposition. In the process of forming the reflective layer, a method for forming the reflective layer may be either physical vapor deposition or chemical vapor deposition. The physical vapor deposition may be vacuum deposition, sputtering, ion plating, an ion cluster beam, etc. The chemical vapor deposition may be plasma chemical vapor deposition, thermal chemical vapor deposition, photochemical vapor deposition, etc. The thickness of the reflective layer can be 10 nm or more and 300 nm or less. The reflective layer can have a light-transmitting property or a light-shielding property. The light-transmitting reflective layer can be a dielectric layer. The light-shielding reflective layer can be a metal layer. A material for forming the dielectric layer can be a metal compound or silicon oxide. The metal compound can be a metal sulfide, a metal oxide, a metal fluoride, or a metal nitride. The metal sulfide can be zinc sulfide, etc. The metal oxide can be titanium oxide, etc. The metal fluoride can be magnesium fluoride or calcium fluoride, etc. The metal nitride can be aluminum nitride, etc. The metal of the reflective layer can be aluminum, silver, copper, nickel, titanium, or gold.

Among these methods, vacuum deposition and ion plating are preferable because they have higher productivity than other methods and can form a high-quality reflective layer. Film formation conditions in the physical vapor deposition method and the chemical vapor deposition method can be selected according to the material for forming the reflective layer.

In the reflective layer, an adhesive layer may be formed on a surface opposite to the surface in contact with the embossed layer. At this time, an adhesive layer having such a thickness as to fill the unevenness of a laminate of the embossed layer and the reflective layer is formed. Then, an adherend is placed on a surface of the adhesive layer opposite to the surface in contact with the reflective layer. The adherend and the embossed layer are bonded by the adhesive layer. Thereby, an optical structure can be obtained.

While the best mode for carrying out the present invention has been described above with reference to the accompanying drawings, the scope of the present disclosure is not limited to the embodiments shown and described, but may include all embodiments that bring about effects equivalent to those aimed for by the present invention. Furthermore, the scope of the present disclosure is not limited to the inventive features defined by the claims, but also includes all disclosed respective features and any combination of the features.

The terms "portion", "element", "pixel", "cell", "segment", "unit", "display element", and "article" as used in this disclosure are physical entities. The physical entity can refer to a physical form or a spatial form surrounded by physical matters. The physical entity can be a structure. The structure can have a particular function. A combination of structures having specific functions can exhibit a synergistic effect by a combination of the functions of the structures.

Terms (e.g., the text of the appended claims) used within this disclosure and the appended claims in particular are generally intended as "open" terms (e.g., the term "having" should be interpreted as "having at least", and the term "including" should be interpreted as "including but not limited to", etc.).

In addition, when a term, a configuration, a feature, an aspect, or an embodiment is interpreted, reference should be made to the drawings as necessary. Matters can be derived directly and unambiguously from the drawings, as well as text, should be support for amendment.

Moreover, if a claim recitation into which a specific number is introduced is intended, such an intent will be explicitly recited in the claim, and in the absence of such a recitation, no such an intent is present. For example, to aid understanding, the following appended claims may contain usage of the introductory phrases "at least one" and "one or more" to introduce a listing of claims. The use of such phrases, however, should not be taken to imply that the introduction of a claim recitation by the indefinite article "a" or "an" limits a particular claim containing such a claim to embodiments containing only one such recitation. The introductory phrases "one or more" or "at least one" and indefinite articles such as "a" or "an" should be interpreted as meaning "one" or "one or more". The same applies to the use of explicit articles used to introduce claim recitations.

According to the embodiment of the present invention, positions of ridge lines in a cell are shifted in parallel by a shift amount determined by a random number such as a pseudo random number within a range equal to or less than an interval between adjacent ridge lines, whereby the same optical characteristics can be realized by different physical configurations. Such a technique can be applied to a technical field in which forgery prevention is improved by complication of a pattern.

## Claims

1. An optical structure (10) in which a plurality of cells (14) having a pleat structure are regularly aligned in contact with each other on an embossed surface, wherein
the pleat structure includes a plurality of inclined surfaces parallel to each other, the pleat structure includes a linear ridge line (12) formed of an inclined surface end, the ridge line (12) is parallel to a straight line approximating a smooth curved line, depths of pleat structures of adjacent cells (14) are uniform, an interval of ridge lines (12) in a cell (14) continuously varies between adjacent cells (14), an inclined surface group of each aligned cell (14) displays an appearance of a smooth curved surface by reflected light of the inclined surfaces, and a distance of a ridge line (12), among the ridge lines (12) in each cell (14), closest to a predetermined reference point of the cell (14) from the predetermined reference point has artificial fluctuation,
**characterized in that**
the artificial fluctuation is realized by shifting the ridge line (12) in parallel by a shift amount determined by a random number in any one of the cells (14).

2. The optical structure (10) according to claim 1, wherein the shift amount is calculated using a pseudo random number in a range equal to or less than an interval between adjacent ridge lines (12) in a same cell (14).

3. The optical structure (10) according to claim 1 or 2, wherein the shift amount is calculated for each of the cells (14).

4. The optical structure (10) according to claim 1, wherein the cells (14) are grouped such that cells (14) separated from each other by a predetermined distance on the embossed surface belong to a same group, and
the shift amount is calculated for each group.

5. The optical structure (10) according to claim 4, wherein the predetermined distance is an isolation distance at which shading due to repetition of grouped cells (14) is not recognized as artifacts.

6. The optical structure (10) according to claim 5, wherein the isolation distance is equal to or greater than 10 cm.

7. An artifact reduction method in an optical structure (10) in which a plurality of cells (14) having a pleat structure are regularly aligned in contact with each other on an embossed surface, wherein
in the optical structure (10),
the pleat structure includes a plurality of inclined surfaces parallel to each other, the pleat structure includes a linear ridge line (12) formed of an inclined surface end, the ridge line (12) is parallel to a straight line approximating a smooth curved line, depths of pleat structures of adjacent cells (14) are uniform, an interval of ridge lines (12) in a cell (14) continuously varies between adjacent cells (14), an inclined surface group of each aligned cell (14) displays an appearance of a smooth curved surface by reflected light of the inclined surfaces, and a distance of a ridge line (12), among the ridge lines (12) in each cell (14), closest to a predetermined reference point of the cell (14) from the predetermined reference point has artificial fluctuation,
**characterized in that** the method comprises
realizing the artificial fluctuation by shifting the ridge line (12) in parallel by a shift amount determined by a random number in any one of the cells (14).

8. The artifact reduction method according to claim 7, further comprising calculating the shift amount using a pseudo random number within a range equal to or less than an interval between adjacent ridge lines (12) in a same cell (14).

9. The artifact reduction method according to claim 7 or 8, further comprising calculating the shift amount for each of the cells (14).

10. The artifact reduction method according to claim 7 or 8, further comprising grouping the cells (14) such that cells (14) separated from each other by a predetermined distance on the embossed surface belong to a same group, and
calculating the shift amount for each group.

11. The artifact reduction method according to claim 10, wherein the predetermined distance is an isolation distance at which shading due to repetition of grouped cells (14) is not recognized as artifacts.

12. The artifact reduction method according to claim 11, wherein the isolation distance is 10 cm (centimeters).

## Patentansprüche

1. Optische Struktur (10), in der eine Vielzahl von Zellen (14) mit einer Faltenstruktur regelmäßig in Kontakt miteinander auf einer erhabenen Oberfläche ausgerichtet sind, wobei
die Faltenstruktur eine Vielzahl von geneigten Oberflächen parallel zueinander enthält, die Faltenstruktur eine lineare Firstlinie (12) enthält, die aus einem Ende einer geneigten Oberfläche gebildet ist, die Firstlinie (12) parallel zu einer geraden Linie ist, die sich einer glatten gekrümmten Linie annähert, Tiefen von Faltenstrukturen von benachbarten Zellen (14) einheitlich sind, ein Intervall von Firstlinien (12) in einer Zelle (14) kontinuierlich zwischen benachbarten Zellen (14) variiert, eine geneigte Oberfläche-Gruppe jeder ausgerichteten Zelle (14) durch reflektiertes Licht der geneigten Oberflächen eine Erscheinung einer glatten gekrümmten Oberfläche anzeigt, und ein Abstand einer Firstlinie (12) unter den Firstlinien (12) in jeder Zelle (14), die einem vorbestimmten Referenzpunkt der Zelle (14) am nächsten ist, von dem vorbestimmten Referenzpunkt eine künstliche Fluktuation aufweist,
**dadurch gekennzeichnet, dass**
die künstliche Fluktuation durch parallele Verschiebung der Firstlinie (12) um ein durch eine Zufallszahl bestimmtes Verschiebungsausmaß in einer der Zellen (14) realisiert wird.

2. Optische Struktur (10) nach Anspruch 1, wobei das Verschiebungsausmaß unter Verwendung einer Pseudozufallszahl in einem Bereich gleich wie oder kleiner als ein Intervall zwischen benachbarten Firstlinien (12) in einer gleichen Zelle (14) berechnet wird.

3. Optische Struktur (10) nach Anspruch 1 oder 2, wobei das Verschiebungsausmaß für jede der Zellen (14) berechnet wird.

4. Optische Struktur (10) nach Anspruch 1, wobei die Zellen (14) so gruppiert sind, dass Zellen (14), die durch einen vorbestimmten Abstand auf der erhabenen Oberfläche voneinander getrennt sind, zu einer gleichen Gruppe gehören, und
das Verschiebungsausmaß für jede Gruppe berechnet wird.

5. Optische Struktur (10) nach Anspruch 4, wobei der vorbestimmte Abstand ein Isolationsabstand ist, bei dem eine Schattierung aufgrund von einer Wiederholung von gruppierten Zellen (14) nicht als Artefakte erkannt werden.

6. Optische Struktur (10) nach Anspruch 5, wobei der Isolationsabstand gleich wie oder größer als 10 cm ist.

7. Verfahren zur Reduzierung von Artefakten in einer optischen Struktur (10), in der eine Vielzahl von Zellen (14) mit einer Faltenstruktur regelmäßig in Kontakt miteinander auf einer erhabenen Oberfläche ausgerichtet sind, wobei
in der optischen Struktur (10),
die Faltenstruktur eine Vielzahl von geneigten Oberflächen parallel zueinander enthält, die Faltenstruktur eine lineare Firstlinie (12) enthält, die aus einem Ende einer geneigten Oberfläche gebildet ist, die Firstlinie (12) parallel zu einer geraden Linie ist, die sich einer glatten gekrümmten Linie annähert, Tiefen von Faltenstrukturen von benachbarten Zellen (14) einheitlich sind, ein Intervall von Firstlinien (12) in einer Zelle (14) kontinuierlich zwischen benachbarten Zellen (14) variiert, eine geneigte Oberfläche-Gruppe jeder ausgerichteten Zelle (14) durch reflektiertes Licht der geneigten Oberflächen eine Erscheinung einer glatten gekrümmten Oberfläche anzeigt, und ein Abstand einer Firstlinie (12) unter den Firstlinien (12) in jeder Zelle (14), die einem vorbestimmten Referenzpunkt der Zelle (14) am nächsten ist, von dem vorbestimmten Referenzpunkt eine künstliche Fluktuation aufweist,
**dadurch gekennzeichnet, dass** das Verfahren umfasst
Realisieren der künstlichen Fluktuation durch paralleles Verschieben der Firstlinie (12) um ein durch eine Zufallszahl bestimmtes Verschiebungsausmaß in einer der Zellen (14).

8. Verfahren zur Reduzierung von Artefakten nach Anspruch 7, ferner umfassend das Berechnen des Verschiebungsausmaßes unter Verwendung einer Pseudozufallszahl innerhalb eines Bereichs, der gleich wie oder kleiner als ein Intervall zwischen benachbarten Firstlinien (12) in einer gleichen Zelle (14) ist.

9. Verfahren zur Reduzierung von Artefakten nach Anspruch 7 oder 8, ferner umfassend das Berechnen des Verschiebungsausmaßes für jede der Zellen (14).

10. Verfahren zur Reduzierung von Artefakten nach Anspruch 7 oder 8, ferner umfassend das Gruppieren der Zellen (14) derart, dass Zellen (14), die durch einen vorbestimmten Abstand auf der erhabenen Oberfläche voneinander getrennt sind, zu einer gleichen Gruppe gehören, und
Berechnen des Verschiebungsausmaßes für jede Gruppe.

11. Verfahren zur Reduzierung von Artefakten nach Anspruch 10, wobei der vorbestimmte Abstand ein Isolationsabstand ist, bei dem eine Schattierung aufgrund von einer Wiederholung gruppierter Zellen (14) nicht als Artefakte erkannt werden.

12. Verfahren zur Reduzierung von Artefakten nach Anspruch 11, wobei der Isolationsabstand 10 cm (Zentimeter) beträgt.

## Revendications

1. Structure optique (10) dans laquelle une pluralité de cellules (14) ayant une structure plissée sont alignées de façon régulière en contact les unes avec les autres sur une surface gaufrée, dans laquelle
la structure plissée comporte une pluralité de surfaces inclinées parallèles les unes aux autres, la structure plissée comporte une ligne de crête linéaire (12) constituée d'une extrémité de surface inclinée, la ligne de crête (12) est parallèle à une ligne droite se rapprochant d'une ligne courbe régulière, les profondeurs des structures plissées de cellules adjacentes (14) sont uniformes, un intervalle entre lignes de crête (12) dans une cellule (14) varie de façon continue entre cellules adjacentes (14), un groupe de surfaces inclinées de chaque cellule alignée (14) affiche une apparence d'une surface courbe régulière par la lumière réfléchie des surfaces inclinées, et une distance entre une ligne de crête (12), parmi les lignes de crête (12) dans chaque cellule (14), la plus proche d'un point de référence prédéterminé de la cellule (14) et le point de référence prédéterminé présente une fluctuation artificielle,
**caractérisée en ce que**
la fluctuation artificielle est réalisée par décalage de la ligne de crête (12) en parallèle d'une quantité de décalage déterminée par un nombre aléatoire dans l'une quelconque des cellules (14).

2. Structure optique (10) selon la revendication 1, dans laquelle la quantité de décalage est calculée au moyen d'un nombre pseudo-aléatoire dans une plage égale ou inférieure à un intervalle entre lignes de crête (12) adjacentes dans une même cellule (14).

3. Structure optique (10) selon la revendication 1 ou 2, dans laquelle la quantité de décalage est calculée pour chacune des cellules (14).

4. Structure optique (10) selon la revendication 1, dans laquelle les cellules (14) sont regroupées de telle sorte que des cellules (14) séparées l'une de l'autre par une distance prédéterminée sur la surface gaufrée appartiennent à un même groupe, et
la quantité de décalage est calculée pour chaque groupe.

5. Structure optique (10) selon la revendication 4, dans laquelle la distance prédéterminée est une distance d'isolement à laquelle un ombrage dû à la répétition de cellules regroupées (14) n'est pas reconnu comme un artefact.

6. Structure optique (10) selon la revendication 5, dans laquelle la distance d'isolement est égale ou supérieure à 10 cm.

7. Procédé de réduction d'artefacts dans une structure optique (10) dans laquelle une pluralité de cellules (14) ayant une structure plissée sont alignées de façon régulière en contact les unes avec les autres sur une surface gaufrée, dans lequel,
dans la structure optique (10),
la structure plissée comporte une pluralité de surfaces inclinées parallèles les unes aux autres, la structure plissée comporte une ligne de crête linéaire (12) constituée d'une extrémité de surface inclinée, la ligne de crête (12) est parallèle à une ligne droite se rapprochant d'une ligne courbe régulière, les profondeurs des structures plissées de cellules adjacentes (14) sont uniformes, un intervalle entre lignes de crête (12) dans une cellule (14) varie de façon continue entre cellules adjacentes (14), un groupe de surfaces inclinées de chaque cellule alignée (14) affiche une apparence d'une surface courbe régulière par la lumière réfléchie des surfaces inclinées, et une distance entre une ligne de crête (12), parmi les lignes de crête (12) dans chaque cellule (14), la plus proche d'un point de référence prédéterminé de la cellule (14) et le point de référence prédéterminé présente une fluctuation artificielle,
**caractérisé en ce que** le procédé comprend
la réalisation de la fluctuation artificielle par décalage de la ligne de crête (12) en parallèle d'une quantité de décalage déterminée par un nombre aléatoire dans l'une quelconque des cellules (14).

8. Procédé de réduction d'artefacts selon la revendication 7, comprenant en outre le calcul de la quantité de décalage au moyen d'un nombre pseudo-aléatoire dans une plage égale ou inférieure à un intervalle entre lignes de crête (12) adjacentes dans une même cellule (14).

9. Procédé de réduction d'artefacts selon la revendication 7 ou 8, comprenant en outre le calcul de la quantité de décalage pour chacune des cellules (14).

10. Procédé de réduction d'artefacts selon la revendication 7 ou 8, comprenant en outre le regroupement des cellules (14) de telle sorte que des cellules (14) séparées l'une de l'autre par une distance prédéterminée sur la surface gaufrée appartiennent à un même groupe, et
le calcul de la quantité de décalage pour chaque groupe.

11. Procédé de réduction d'artefacts selon la revendication 10, dans lequel la distance prédéterminée est une distance d'isolement à laquelle un ombrage dû à la répétition de cellules regroupées (14) n'est pas reconnu comme un artefact.

12. Procédé de réduction d'artefacts selon la revendication 11, dans lequel la distance d'isolement est de 10 cm (centimètres).
